# FASCICULE DE BREVET EUROPEEN

(11) **EP 0 927 142 B1**
(45) Date de publication et mention de la délivrance du brevet: **28.03.2001**
(21) Numéro de dépôt: 98922854.9
(22) Date de dépôt: 23.04.1998
(51) Int. Cl.: C01B 17/04

(54) **PROCEDE D'ELIMINATION DES COMPOSES SOUFRES H 2?S, SO 2?, COS ET/OU CS 2? CONTENUS DANS UN GAZ RESIDUAIRE D'USINE A SOUFRE AVEC RECUPERATION DESDITS COMPOSES SOUS LA FORME DE SOUFRE**
VERFAHREN ZUR ENTFERNUNG UND RÜCKGEWINNUNG VON SCHWEFELVERBINDUNGEN H2S, SO2, COS UND/ODER CS2 AUS EINEM ABGAS EINER SCHWEFELANLAGE
METHOD FOR ELIMINATING H 2?S, SO 2?, COS AND/OR CS 2? SULPHUR COMPOUNDS, CONTAINED IN A SULPHUR FACTORY WASTE GAS WITH RECUPERATION OF SAID COMPOUNDS IN THE FORM OF SULPHUR

(30) Priorité: 24.04.1997 FR 9705071
(43) Date de publication de la demande: 07.07.1999
(73) Titulaire: Elf Exploration Production, 92400 Courbevoie (FR)
(72) Inventeur: NOUGAYREDE, Jean, F-64000 Pau (FR)
(74) Mandataire: Cabinet Hirsch
(86) Numéro de dépôt international: FR9800816
(87) Numéro de publication internationale: WO9847813

(56) Documents cités:
- EP-A- 0 218 302
- EP-A- 0 346 218
- EP-A- 0 424 259
- WO-A-87/02655
- WO-A-94/21359
- WO-A-94/21555

## Description

L'invention concerne un procédé d'élimination des composés soufrés H₂S, SO₂, COS et/ou CS₂ contenus dans un gaz résiduaire d'usine à soufre, avec récupération desdits composés sous la forme de soufre.

Les gaz résiduaires provenant d'usines à soufre, dans lesquelles on produit du soufre par le procédé CLAUS d'oxydation ménagée d'un gaz acide renfermant de l'H₂S au moyen d'un gaz renfermant de l'oxygène libre, contiennent de l'ordre de 0,2% à 4% en volume de composés soufrés, dont une forte proportion consiste en H₂S, le reste étant constitué de SO₂, COS, CS₂ et de soufre vapeur et/ou vésiculaire.

De tels gaz résiduaires sont couramment traités pour en abaisser au maximum la teneur globale en composés soufrés dans le but de permettre leur rejet à l'atmosphère, après les avoir incinérés, en respectant les normes imposées par la législation en matière de pollution atmosphérique et simultanément de récupérer ces composés soufrés sous une forme contribuant à augmenter le rendement en produits valorisables formés à partir du gaz acide traité dans l'usine à soufre

La citation EP-A-0346218 décrit un procédé d'élimination des composés soufrés H₂S, SO₂, COS et/ou CS₂ présents dans un gaz résiduaire d'usine à soufre avec récupération desdits composés sous la forme de soufre, lequel procédé consiste (i) à mettre en contact le gaz résiduaire, issu de l'usine à soufre, avec un catalyseur d'hydrolyse des composés COS et CS₂ en H₂S, disposé dans une unité d'hydrolyse, en opérant à une température suffisante pour produire un gaz résiduaire hydrolysé renfermant H₂S et SO₂ et substantiellement exempt de COS et CS₂, (ii) à amener le gaz résiduaire hydrolysé, après une étape de refroidissement à une température inférieure au point de rosée du soufre dans le gaz, à une unité d'épuration constituée d'une pluralité de zones catalytiques renfermant chacune un catalyseur promoteur de la réaction de CLAUS, dit catalyseur CLAUS, et opérant chacune, tour à tour, en phase de réaction, puis en phase de régénération et enfin en phase de refroidissement de manière qu'à chaque instant il y ait au moins une zone catalytique en phase de réaction et une zone catalytique en phase de régénération ou de refroidissement, (iii)à faire passer le gaz résiduaire hydrolysé, amené à l'unité d'épuration, dans la zone ou les zones catalytiques en phase de réaction, en opérant à des températures inférieures au point de rosée du soufre, de telle sorte que les composés H₂S et SO₂ présents dans ledit gaz réagissent l'un sur l'autre pour former du soufre, qui se dépose sur le catalyseur CLAUS contenu dans lesdites zones, et qu'on obtienne, en sortie de l'unité d'épuration, un gaz résiduaire substantiellement épuré, (iv) à faire circuler dans la zone catalytique en phase de régénération, qui renferme du catalyseur CLAUS chargé de soufre, un courant de gaz non oxydant ayant une température entre 200°C et 500°C, plus particulièrement entre 250°C et 400°C, pour régénérer ledit catalyseur et former un effluent gazeux chargé de soufre vaporisé, et (v) à faire passer un courant de gaz ayant une température inférieure à 160°C dans la zone catalytique renfermant le catalyseur venant d'être régénéré, pour refroidir ledit catalyseur jusqu'à la température requise pour une nouvelle mise en contact avec le gaz résiduaire hydrolysé.

Dans une variante de ce procédé, telle que décrite dans la citation EP-A-0424259, on introduit dans l'unité d'hydrolyse un flux gazeux contenant de l'oxygène libre et on effectue dans ladite unité d'hydrolyse une oxydation partielle d'H₂S en SO₂ et éventuellement en soufre au moyen dudit flux gazeux au contact d'un catalyseur d'oxydation de l'H₂S contenu dans cette unité, ledit catalyseur pouvant consister en le catalyseur d'hydrolyse des composés COS et CS₂ en H₂S, le débit dudit flux gazeux étant contrôlé de manière à maintenir à une valeur substantiellement égale à 2 :1 le rapport molaire H₂S :SO₂ dans le gaz résiduaire hydrolysé entrant dans l'unité d'épuration.

Dans une autre variante, qui fait l'objet de la demande de brevet français N° 9512988 déposée le 03-11-1995 au nom de la demanderesse et qui est applicable tant au procédé de la citation EP-A- 0346218 qu'au procédé de la citation EP-A-0424259, on opère de telle sorte que le gaz résiduaire substantiellement épuré, issu de l'unité d'épuration, renferme H₂S comme seul composé soufré en concentration inférieure à 0,5% en volume et l'on fait passer ledit gaz résiduaire substantiellement épuré dans une unité d'oxydation catalytique de l'H₂S résiduel en soufre opérant à basse température, c'est-à-dire à température inférieure à 150°C et, par exemple, allant de 90°C à 130°C, pour parfaire l'épuration du gaz.

Dans le procédé précité et ses variantes, la régénération du catalyseur chargé de soufre et le refroidissement du catalyseur régénéré sont réalisés en faisant circuler le gaz de régénération et le gaz de refroidissement en circuit fermé au moyen d'une soufflante, avec utilisation d'équipements de chauffage et de refroidissement pour porter le gaz de régénération et le gaz de refroidissement aux températures appropriées.

On a maintenant trouvé que la régénération du catalyseur chargé de soufre et le refroidissement du catalyseur régénéré pouvaient être mis en oeuvre, de manière simple et efficace, avec des courants gazeux prélevés dans le procédé et circulant en circuit ouvert et à la température requise pour réaliser ladite régénération et ledit refroidissement. Ceci permet de se dispenser des équipements de chauffage et de refroidissement du gaz de régénération et également de la soufflante, qui sont indispensables lorsque la régénération et le refroidissement du catalyseur sont mis en oeuvre en circuit fermé.

L'invention a donc pour objet un procédé d'élimination des composés soufrés H₂S, SO₂, COS et/ou CS₂ contenus dans un gaz résiduaire d'usine à soufre avec récupération desdits composés sous la forme de soufre, lequel procédé consiste (i) à mettre en contact le gaz résiduaire, issu de l'usine à soufre, avec un catalyseur d'hydrolyse des composés COS et CS₂ en H₂S, disposé dans une unité d'hydrolyse, en opérant à une température suffisante pour produire un gaz résiduaire hydrolysé renfermant H₂S et SO₂ et substantiellement exempt de COS et CS₂, (ii) à amener le gaz résiduaire hydrolysé, après une étape de refroidissement à une température inférieure au point de rosée du soufre, à une unité d'épuration constituée d'une pluralité de zones catalytiques renfermant chacune un catalyseur promoteur de la réaction de CLAUS, dit catalyseur CLAUS, et opérant chacune, tour à tour, en phase de réaction, puis en phase de régénération et enfin en phase de refroidissement de manière qu'à chaque instant il y ait au moins une zone catalytique en phase de réaction et une zone catalytique en phase de régénération ou de refroidissement, (iii) à faire passer le gaz résiduaire hydrolysé, amené à l'unité d'épuration, dans la zone ou les zones catalytiques en phase de réaction, en opérant à des températures inférieures au point de rosée du soufre, de telle sorte que les composés H₂S et SO₂ présents dans ledit gaz réagissent l'un sur l'autre pour former du soufre, qui se dépose sur le catalyseur contenu dans lesdites zones, et qu'on obtienne, en sortie de l'unité d'épuration, un gaz résiduaire substantiellement épuré, (iv) à faire circuler dans la zone catalytique en phase de régénération, qui renferme du catalyseur CLAUS chargé de soufre, un courant de gaz non oxydant ayant une température entre 200°C et 500°C, plus particulièrement entre 250°C et 400°C, pour régénérer ledit catalyseur et former un effluent gazeux chargé de soufre vaporisé, et (v) à faire passer un courant de gaz ayant une température inférieure à 160°C dans la zone catalytique renfermant le catalyseur venant d'être régénéré, pour refroidir ledit catalyseur jusqu'à la température requise pour une nouvelle mise en contact avec le gaz résiduaire hydrolysé et il se caractérise en ce qu'on prélève au moins une fraction du gaz résiduaire hydrolysé, issu de l'unité d'hydrolyse, pour constituer la totalité du courant de gaz circulant dans la zone catalytique en phase de régénération et réinjecte la totalité de l'effluent gazeux sortant de ladite zone dans le gaz résiduaire hydrolysé amené à l'unité d'épuration, en un point situé en aval dudit prélèvement et en amont de l'étape de refroidissement du gaz résiduaire hydrolysé, dans laquelle le soufre vaporisé au cours de la phase de régénération est séparé par condensation, avant l'entrée du gaz résiduaire hydrolysé dans l'unité d'épuration et en ce qu'on prélève au moins une fraction du gaz résiduaire à traiter, amené à l'unité d'hydrolyse, pour constituer la totalité du courant de gaz de refroidissement passant au contact du catalyseur venant d'être régénéré présent dans la zone catalytique en phase de refroidissement et réintroduit la totalité de l'effluent gazeux sortant de cette zone dans ledit gaz résiduaire, en un point situé en aval de ce prélèvement et en amont d'une étape de chauffage du gaz résiduaire avant l'introduction dudit gaz dans l'unité d'hydrolyse.

La fraction de gaz prélevée sur le gaz résiduaire hydrolysé pour constituer le courant de gaz circulant dans la zone catalytique en phase de régénération peut représenter 30% à 100% du débit dudit gaz résiduaire hydrolysé. En particulier, ladite fraction représente 30% à 80% et plus spécialement 40% à 60% du débit du gaz résiduaire hydrolysé.

De même, la fraction de gaz prélevée sur le gaz résiduaire à traiter pour constituer le courant de gaz de refroidissement, passant au contact du catalyseur venant d'être régénéré présent dans la zone catalytique en phase de refroidissement, peut également représenter 30% à 100% du débit dudit gaz résiduaire. Ladite fraction représente en particulier 30% à 80% et plus spécialement 40% à 60% du débit du gaz résiduaire à traiter.

Comme indiqué plus haut, on effectue, dans l'unité d'hydrolyse, une hydrolyse catalytique des composés COS et CS₂, présents dans le gaz résiduaire, en H₂S. En plus de cette hydrolyse, on peut encore, en introduisant dans l'unité d'hydrolyse un débit contrôlé d'un flux gazeux contenant de l'oxygène libre, comme indiqué dans la citation EP-A-0424259, réaliser dans cette unité une certaine oxydation de l'H₂S contenu dans le gaz résiduaire en SO₂ et éventuellement en soufre, au contact d'un catalyseur d'oxydation de l'H₂S contenu dans ladite unité. Dans ce cas, on opère avantageusement en introduisant le flux gazeux contenant de l'oxygène libre dans le gaz résiduaire amené à l'unité d'hydrolyse, en un point qui est situé en aval du point de réintroduction, dans ledit gaz résiduaire, de l'effluent gazeux sortant de la zone catalytique en phase de refroidissement, et, qui se trouve, de préférence, en amont de l'étape de chauffage du gaz résiduaire avant l'introduction dudit gaz dans l'unité d'hydrolyse.

Avantageusement, la réaction d'hydrolyse des composés COS et CS₂ en H₂S et, lorsqu'elle est utilisée, la réaction d'oxydation de l'H₂S que l'on met en oeuvre dans l'unité d'hydrolyse sont effectuées à des températures comprises entre 180°C et 600°C et de préférence entre 250°C et 400°C.

Lorsque l'on réalise uniquement une hydrolyse des composés COS et CS₂ en H₂S dans l'unité d'hydrolyse, ladite unité renferme un catalyseur promoteur de cette réaction d'hydrolyse. Par contre, lorsqu'on effectue une hydrolyse des composés COS et CS₂ en H₂S et une oxydation de l'H₂S dans l'unité d'hydrolyse, ladite unité peut renfermer soit un catalyseur promoteur de la réaction d'hydrolyse et un catalyseur promoteur de la réaction d'oxydation, utilisés en mélange ou sous la forme de lits séparés, ou, avantageusement, un catalyseur unique susceptible de promouvoir simultanément les deux réactions.

Parmi les catalyseurs utilisables pour promouvoir la réaction d'hydrolyse des composés COS et CS₂ en H₂S et la réaction d'oxydation de l'H₂S, on peut citer, en particulier,
- les catalyseurs consistant en alumines activées ;
- les catalyseurs associant au moins un composé d'un métal choisi parmi Fe, Ni, Co, Cu, Zn, Cr et Mo à un support de silice ou/et d'alumine, tels que ceux décrits dans la citation FR-A-2327960 ;
- les catalyseurs associant au moins un composé d'un métal de transition à un support d'alumine activée stabilisée thermiquement, tels que ceux décrits dans la citation FR-A-2540092, ou à un support de silice ou/et d'oxyde de titane, tels que ceux décrits dans la citation FR-A-2511663 ;
- les catalyseurs à base d'oxyde de titane et notamment les catalyseurs consistant en oxyde de titane, comme ceux décrits dans la citation FR-A-2481145, ou bien les catalyseurs formés d'un mélange d'oxyde de titane et d'un sulfate d'un métal alcalino-terreux, tels que ceux décrits dans la citation EP-A-0060741, ou encore les catalyseurs associant un composé d'un métal de transition, notamment Fe, Ni ou Co, à un support d'oxyde de titane, comme ceux décrits dans la citation EP-A-0218302 ;
- les catalyseurs associant au moins un composé de métal de transition à un support de SiC, tels que ceux décrits dans la citation FR-A-2734809.

Le temps de séjour global des gaz, à savoir gaz résiduaire à traiter seul ou mélange du gaz résiduaire d'usine à soufre et du flux gazeux contenant de l'oxygène libre, au contact du catalyseur ou des catalyseurs présents dans l'unité d'hydrolyse peut aller de 0,5 seconde à 10 secondes et en particulier de 1 seconde à 6 secondes, ces valeurs étant données dans les conditions normales de pression et de température.

Le chauffage du gaz résiduaire avant son introduction dans l'unité d'hydrolyse peut être réalisé par toute technique connue et en particulier par échange indirect de chaleur avec un fluide à température convenable.

Le refroidissement du gaz résiduaire hydrolysé issu de l'unité d'hydrolyse, à une température inférieure au point de rosée du soufre, après réinjection, dans ledit gaz, de l'effluent gazeux issu de la zone catalytique en phase de régénération et avant introduction de ce gaz dans l'unité d'épuration, est réalisé avantageusement par échange indirect de chaleur avec un fluide froid ayant une température appropriée pour obtenir, d'une part, la condensation du soufre vapeur contenu dans le gaz et, d'autre part, la température souhaitée à l'entrée de l'unité d'épuration. Ledit refroidissement est effectué, par exemple, en faisant appel à un échangeur indirect de chaleur du type condenseur à soufre

L'unité d'épuration opère avantageusement de telle sorte qu'à chaque instant il y ait une zone catalytique, voire plusieurs zones catalytiques fonctionnant en parallèle, en phase de réaction et une zone catalytique en phase de régénération/refroidissement. L'unité d'épuration peut encore opérer de telle sorte qu'à chaque instant il y ait une zone catalytique, voire plusieurs zones catalytiques fonctionnant en parallèle, en phase de réaction, une zone catalytique en phase de régénération et une zone catalytique en phase de refroidissement.

La température à laquelle est mise en oeuvre la réaction de formation de soufre entre H₂S et SO₂ dans la zone ou les zones catalytiques en phase de réaction de l'unité d'épuration est comprise entre le point de rosée et le point de solidification du soufre formé. Ladite température peut donc se situer entre 120°C et 180°C et va plus particulièrement de 125°C à 150°C.

Le catalyseur utilisé dans les zones catalytiques de l'unité d'épuration peut être choisi parmi les produits qui sont couramment utilisés pour promouvoir la réaction CLAUS de formation de soufre entre H₂S et SO₂. En particulier, ledit catalyseur peut être tel que bauxite, alumine, silice, dioxyde de titane, dioxyde de zirconium, zéolithes naturelles ou synthétiques, charbon actif, catalyseur obtenu en associant un composé de titane ou de métal des terres rares tel que lanthane à un support d'alumine comme proposé dans la citation FR-A-2658091, catalyseur consistant en oxyde de titane renfermant un sulfate de métal alcalinoterreux tel que CaSO₄ comme décrit dans la citation FR-A- 2501532, catalyseur formé d'oxyde de titane ou d'alumine imprégné d'un composé de fer, nickel ou cobalt comme proposé dans la citation EP-A-0218302 ou encore catalyseur formé d'un composé de métal de transition associé à un support de SiC comme proposé dans la citation FR-A-2734809.

Le rapport molaire H₂S :SO₂ dans le gaz résiduaire hydrolysé introduit dans l'unité d'épuration doit être sensiblement égal à 2 :1 ou, si désiré, supérieur à cette valeur et, par exemple, compris entre 2 :1 et 4 :1.

Le maintien du rapport molaire H₂S :SO₂ à la valeur désirée peut être réalisé en agissant sur le fonctionnement de l'usine à soufre dont est issu le gaz résiduaire à traiter comme décrit dans la citation EP-A-0346218 ou dans la demande de brevet français N° 9512988 ou encore en agissant sur le débit du flux gazeux renfermant de l'oxygène libre injecté dans l'unité d'hydrolyse, lorsque cette variante est utilisée pour la régulation dudit rapport molaire, comme proposé dans la citation EP-A-0424259 ou dans la demande de brevet français N° 9512988.

Lorsque l'unité d'épuration traite un gaz résiduaire hydrolysé renfermant H₂S et SO₂ dans un rapport molaire sensiblement égal à 2 :1, le gaz résiduaire épuré sortant de l'unité d'épuration est généralement soumis à une incinération thermique ou catalytique, pour transformer en SO₂ tous les composés soufrés qu'il peut encore renfermer en très faible quantité globale, avant d'être envoyé à l'atmosphère.

Lorsque l'unité d'épuration traite un gaz résiduaire hydrolysé renfermant H₂S et SO₂ dans un rapport molaire H₂S : SO₂ supérieur à 2 :1 et, par exemple tel que les concentrations dudit gaz en H₂S et SO₂, exprimées en pourcentages volumiques (H₂S) et (SO₂), sont telles que la quantité (H₂S)- 2(SO₂) soit comprise entre 0,1% et 0,5%, le gaz résiduaire épuré sortant de l'unité d'épuration renferme essentiellement H₂S comme composé soufré. Avantageusement ledit gaz résiduaire épuré est amené à passer dans une unité d'oxydation catalytique, dans laquelle l'H₂S résiduel est oxydé sélectivement en soufre au moyen d'un gaz renfermant de l'oxygène libre au contact d'un catalyseur approprié et à des températures inférieures au point de rosée du soufre, et, par exemple, allant de 60°C à 150°C et plus spécialement de 90°C à 130°C, pour parfaire l'épuration du gaz.

Le catalyseur d'oxydation peut être, en particulier, constitué d'une phase active, consistant en un ou plusieurs oxydes et/ou sels d'un ou plusieurs métaux de transition tels que Ni, Co, Fe, Cu, Ag, Mn, Mo, Cr, W et V, déposés sur un support en un matériau réfractaire tel que, par exemple, bauxite, alumine activée et/ou stabilisée, silice, oxyde de titane, oxyde de zirconium, zéolithes, mélanges silice/alumine, mélanges silice/oxyde de titane, mélanges silice/oxyde de zirconium, mélanges oxyde de titane/alumine, carbure réfractaire et notamment SiC, ou bien sur un support en charbon actif. Cette oxydation catalytique peut être mise en oeuvre de manière similaire à celle indiquée notamment dans la demande de brevet français N° 9512988 ou dans l'une ou l'autre des citations EP-A-0218302, FR-A-2702673 et FR-A- 2727101.

Si besoin est, l'effluent gazeux issu de l'unité d'oxydation catalytique peut être soumis également à une incinération thermique ou catalytique avant d'être rejeté à l'atmosphère.

Dans le mode de mise en oeuvre du procédé selon l'invention, dans lequel le gaz résiduaire sortant de l'unité d'épuration est amené à passer dans une unité d'oxydation catalytique, on opère avantageusement de telle sorte qu'à chaque zone catalytique CLAUS de l'unité d'épuration est associée, en série, une zone d'oxydation catalytique appartenant à l'unité d'oxydation catalytique, chaque couple ainsi formé d'une zone catalytique CLAUS et d'une zone d'oxydation catalytique fonctionnant, tour à tour, en phase de réaction, puis en phase de régénération et enfin en phase de refroidissement. Avantageusement, on opère de telle sorte qu'à chaque instant il y ait au moins un couple de zones en phase de réaction et un couple de zones en phase de régénération/refroidissement. On peut encore opérer de telle sorte qu'à chaque instant il y ait un ou plusieurs couples de zones en phase de réaction, un couple de zones en phase de régénération et un couple de zones en phase de refroidissement.

Dans le mode de mise en oeuvre ci-dessus, le courant de gaz chaud, qui circule dans la zone catalytique CLAUS, en phase de régénération, de l'unité d'épuration, passe ensuite dans la zone d'oxydation catalytique associée, également en phase de régénération, de l'unité d'oxydation catalytique et la totalité de l'effluent gazeux sortant de ladite zone d'oxydation catalytique, en phase de régénération, forme l'effluent gazeux qui est réinjecté dans le gaz résiduaire hydrolysé amené à l'unité d'épuration, tandis que le courant de gaz de refroidissement passant au contact du catalyseur, venant d'être régénéré, présent dans la zone catalytique CLAUS, en phase de refroidissement, de l'unité d'épuration, passe ensuite dans la zone d'oxydation catalytique associée, également en phase de refroidissement, de l'unité d'oxydation catalytique et la totalité de l'effluent gazeux sortant de ladite zone d'oxydation catalytique, en phase de refroidissement, forme l'effluent gazeux qui est réintroduit dans le gaz résiduaire amené à l'unité d'hydrolyse.

Comme indiqué précédemment, le gaz résiduaire à traiter, après réinjection dans ce dernier de l'effluent gazeux sortant de la zone catalytique CLAUS, en phase de refroidissement, de l'unité d'épuration ou bien sortant de la zone d'oxydation catalytique associée, en phase de refroidissement, de l'unité d'oxydation catalytique est réchauffé à une température appropriée avant son introduction dans l'unité d'hydrolyse. Lorsque le gaz épuré est soumis à une incinération avant son rejet à l'atmosphère, ledit réchauffage du gaz résiduaire à traiter est réalisé avantageusement par échange indirect de chaleur entre ledit gaz résiduaire et les produits gazeux chauds résultant de cette incinération.

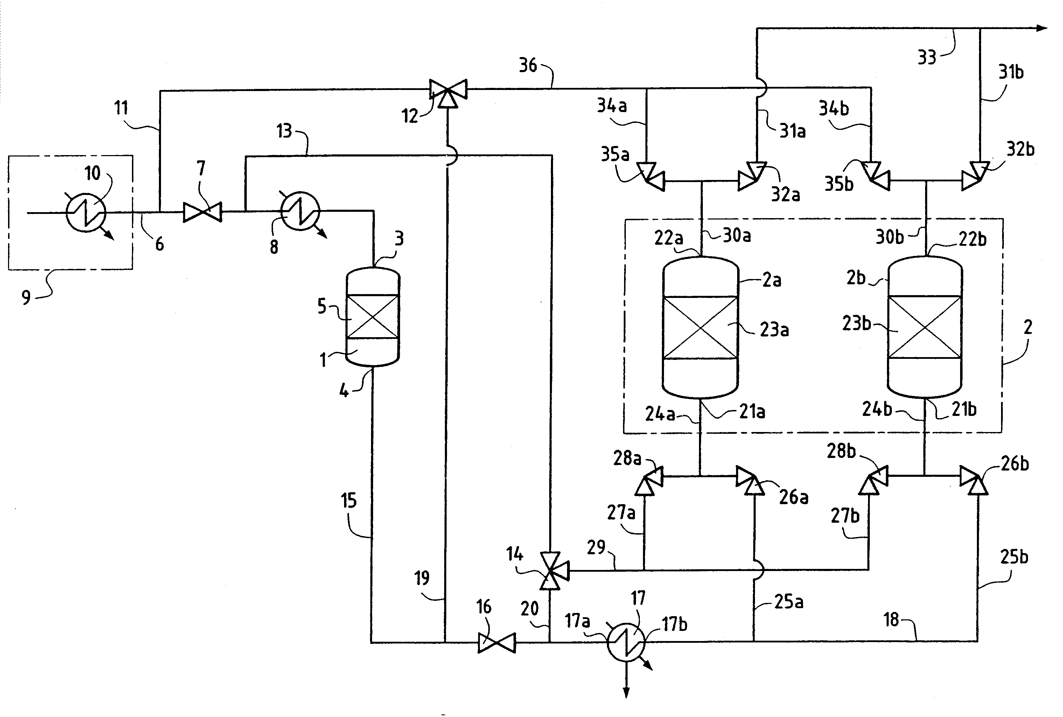

L'invention sera mieux comprise à la lecture de la description donnée ci-après de l'une de ses formes de réalisation utilisant le dispositif représenté schématiquement sur la figure unique du dessin annexé.

Ce dispositif comporte une unité d'hydrolyse 1 et une unité d'épuration 2 formée de deux réacteurs catalytiques 2a et 2b,lesdits réacteurs étant montés en parallèle

L'unité d'hydrolyse 1 comporte une entrée 3 et une sortie 4 séparées l'une de l'autre par un lit fixe 5 d'un catalyseur d'hydrolyse des composés COS et CS₂ en H₂S. Un conduit 6 d'amenée de gaz, sur lequel sont montés une vanne 7 de restriction de débit et le circuit froid d'un échangeur indirect de chaleur 8 du type échangeur gaz/gaz, relie l'entrée 3 de l'unité d'hydrolyse 1 à la source de gaz résiduaire à traiter, par exemple à la sortie d'une usine à soufre 9, ladite sortie étant matérialisée par le dernier condenseur à soufre 10 de l'usine à soufre. Le conduit 6 porte en dérivation un conduit 11, disposé en amont de la vanne 7 et raccordé au premier des orifices d'une vanne 12 à trois voies, et un conduit 13, disposé entre la vanne 7 et l'échangeur de chaleur 8 et raccordé au premier des orifices d'une vanne 14 à trois voies.

La sortie 4 de l'unité d'hydrolyse 1 se prolonge par un conduit 15 d'évacuation pour les gaz, ledit conduit étant connecté, à travers une vanne 16 de restriction de débit, à l'entrée 17a d'un échangeur indirect de chaleur 17 du type condenseur à soufre, dont la sortie 17b est prolongée par un conduit 18. Le conduit 15 porte en dérivation un conduit 19, disposé en amont de la vanne 16 et raccordé au deuxième des orifices de la vanne 12 à trois voies, et un conduit 20, disposé entre la vanne 16 et l'échangeur de chaleur 17 et raccordé au deuxième orifice de la vanne à trois voies 14.

Le réacteur 2a de l'unité d'épuration 2 présente un premier passage 21a et un deuxième passage 22a séparés par un lit fixe 23a d'un catalyseur promoteur de la réaction CLAUS de formation de soufre entre H₂S et SO₂. De même, le réacteur 2b de l'unité d'épuration 2 présente un premier passage 21b et un deuxième passage 22b séparés par un lit fixe 23b d'un catalyseur promoteur de ladite réaction de CLAUS. Le premier passage 21a du réacteur 2a est prolongé par un conduit 24a, qui est relié, d'une part, par un conduit 25a muni d'une vanne 26a au conduit 18 prolongeant la sortie 17b de l'échangeur de chaleur 17 et, d'autre part, par un conduit 27a muni d'une vanne 28a, à un conduit 29 raccordé lui-même au troisième orifice de la vanne 14 à trois voies. De même, le premier passage 21b du réacteur 2b est prolongé par un conduit 24b, qui est relié, d'une part, par un conduit 25b muni d'une vanne 26b au conduit 18 prolongeant la sortie 17b de l'échangeur de chaleur 17 et, d'autre part, par un conduit 27b muni d'une vanne 28b, audit conduit 29.

Le deuxième passage 22a du réacteur 2a est muni d'un conduit 30a, qui est relié, d'une part, par un conduit 31a muni d'une vanne 32a à un conduit 33 d'évacuation du gaz résiduaire épuré et, d'autre part, par un conduit 34a muni d'une vanne 35a à un conduit 36 raccordé au troisième orifice de la vanne 12 à trois voies. De même, le deuxième passage 22b du réacteur 2b est muni d'un conduit 30b, qui est relié, d'une part, par un conduit 31b muni d'une vanne 32b au conduit 33 d'évacuation du gaz résiduaire épuré et, d'autre part, par un conduit 34b muni d'une vanne 35b audit conduit 36.

Le déroulement du procédé dans ce dispositif peut être schématisé comme suit.

On suppose que le réacteur 2a est en phase de réaction et que le réacteur 2b est en phase de régénération. Dans cette situation, les vannes 26a, 32a, 28b et 35b sont ouvertes, tandis que les vannes 28a, 35a, 26b et 32b sont fermées. En outre, la vanne 7 est complètement ouverte et ne crée aucune restriction de débit pour le courant de gaz la traversant, tandis que la vanne 16 est seulement partiellement ouverte et crée une restriction de débit, qui oblige une fraction du courant gazeux arrivant par le conduit 15 à passer dans le conduit 19. Enfin, la vanne 12 est réglée pour mettre en communication le conduit 19 avec le conduit 36, tandis que la vanne 14 est réglée pour mettre en communication le conduit 29 avec le conduit 20.

Le gaz résiduaire à traiter, qui est issu du dernier condenseur à soufre 10 de l'usine à soufre 9 et renferme H₂S, SO₂, COS et CS₂, passe à travers la vanne 7, puis est réchauffé à la température appropriée par passage dans l'échangeur indirect de chaleur 8, avant d'être introduit dans l'unité d'hydrolyse 1, dans laquelle les composés COS et CS₂ présents dans ledit gaz résiduaire sont hydrolysés en H₂S au contact du catalyseur contenu dans l'unité d'hydrolyse. En outre, l'unité d'hydrolyse est également en mesure, si la nature du catalyseur le permet, d'effectuer la réaction de CLAUS entre H₂S et SO₂.

Par le conduit 15 prolongeant la sortie 4 de l'unité d'hydrolyse, on évacue un gaz résiduaire hydrolysé renfermant H₂S et SO₂, éventuellement du soufre vapeur et substantiellement exempt de COS et de CS₂. Du fait de la restriction de débit créée par la vanne 16, une fraction du gaz hydrolysé arrivant par le conduit 15 est dérivée dans le conduit 19, pendant que la partie restante dudit gaz traverse la vanne 16 et reçoit en aval de ladite vanne, par le conduit 20, l'effluent gazeux de régénération provenant du réacteur 2b et arrivant par le conduit 29 et la vanne 14.

Le mélange de gaz résiduaire hydrolysé passant à travers la vanne 16 et d'effluent gazeux de régénération circulant dans le conduit 20 passe dans l'échangeur de chaleur 17, dans lequel ledit mélange est refroidi à une température comprise entre le point de rosée et le point de solidification du soufre de telle sorte que le soufre contenu dans ce mélange se sépare par condensation sous forme liquide et qu'on évacue de l'échangeur 17, par le conduit 18, un courant de gaz résiduaire hydrolysé et à teneur réduite en soufre élémentaire, lequel courant de gaz est amené, par le conduit 25a, la vanne 26a et le conduit 24a, dans le réacteur 2a en phase de réaction.

Dans le réacteur 2a, les composés H₂S et SO₂ présents dans le gaz résiduaire hydrolysé réagissent l'un sur l'autre, au contact du catalyseur CLAUS contenu dans le réacteur, pour former du soufre, qui se dépose sur ledit catalyseur. Par le conduit 30a prolongeant la sortie 22a du réacteur 2a, sort un gaz résiduaire épuré, qui est dirigé par le conduit 31a, à travers la vanne 32a, dans le conduit 33 d'évacuation du gaz résiduaire épuré. Le gaz résiduaire épuré, circulant dans le conduit 33,peut être dirigé, comme indiqué précédemment, selon la nature des composés soufrés résiduels qu'il contient (H₂S seul ou H₂S et SO₂) et la teneur globale en lesdits composés, vers une unité additionnelle d'oxydation catalytique et/ou vers une unité d'incinération.

Le courant de gaz résiduaire hydrolysé, dérivé par le conduit 19 et circulant à travers la vanne 12 et le conduit 36, est introduit dans le réacteur 2b par le conduit 34b, à travers la vanne 35b, et le conduit 30b et balaie le catalyseur CLAUS chargé de soufre contenu dans ledit réacteur 2b, afin de vaporiser ce soufre et ainsi de régénérer le catalyseur. Par le conduit 24b prolongeant la sortie 21b du réacteur 2b, on évacue un effluent gazeux formé dudit courant de gaz de balayage entraînant le soufre vaporisé, lequel effluent gazeux est amené, à travers la vanne 28b et le conduit 27b, au conduit 29 pour être réinjecté, à travers la vanne 14 et le conduit 20, dans le gaz résiduaire hydrolysé circulant dans le conduit 15 entre la vanne 16 et l'échangeur de chaleur 17.

Après une durée suffisante de balayage du catalyseur contenu dans le réacteur 2b par la fraction de gaz résiduaire hydrolysé dérivée, par le conduit 19, du gaz résiduaire hydrolysé sortant du réacteur d'hydrolyse, pour éliminer complètement le soufre déposé sur le catalyseur, on modifie le réglage des vannes 12 et 14 de telle sorte que la vanne 12 mette en communication le conduit 11 avec le conduit 36 et que la vanne 14 mette en communication le conduit 29 avec le conduit 13 et l'on ajuste le degré d'ouverture des vannes 7 et 16 de telle sorte que la vanne 7 soit partiellement ouverte et crée ainsi une restriction de débit, qui oblige une fraction du courant gazeux amené par le conduit 6 à passer dans le conduit 11, et que la vanne 16 soit complètement ouverte et ne crée aucune restriction de débit pour le courant gazeux la traversant.

On poursuit alors le balayage du catalyseur régénéré contenu dans le réacteur 2b, au moyen de la fraction de gaz résiduaire, dérivée par le conduit 11, du gaz résiduaire à traiter issu de l'usine à soufre par le conduit 6, pendant une durée appropriée pour refroidir ledit catalyseur. Par le conduit 24b prolongeant la sortie 21b du réacteur 2b, on évacue un effluent gazeux formé du courant de gaz de balayage constitué de ladite fraction de gaz résiduaire, lequel effluent gazeux est amené, à travers la vanne 28b et le conduit 27b, au conduit 29 pour être réinjecté, à travers la vanne 14 et le conduit 13, dans le courant de gaz résiduaire à traiter circulant dans le conduit 6 entre la vanne 7 et l'échangeur de chaleur 8.

Lorsque le catalyseur contenu dans le réacteur 2b a été refroidi à une température convenable permettant sa réutilisation en phase de réaction, on permute les rôles joués par les réacteurs 2a et 2b, c'est-à-dire qu'on amène le réacteur 2b en phase de réaction CLAUS et le réacteur 2a en phase de régénération/refroidissement. Pour ce faire, on ferme les vannes 35b et 28b, puis ouvre les vannes 26b et 32b et ensuite ferme les vannes 26a et 32a, avec comme résultat la mise du réacteur 2b en phase de réaction. On positionne alors les vannes 12 et 14 pour mettre en communication, respectivement, le conduit 19 avec le conduit 36 et le conduit 29 avec le conduit 20. Enfin, on ouvre les vannes 35a et 28a pour établir la circulation du gaz chaud de régénération dans le réacteur 2a, qui opère alors en phase de régénération. Après une durée suffisante de régénération, le réacteur 2a est alors passé en phase de refroidissement comme indiqué ci-dessus à propos du réacteur 2b.

L'agencement des circuits d'amenée de gaz au réacteur en phase de réaction ou au réacteur en phase de régénération/refroidissement et des circuits d'évacuation de gaz desdits réacteurs peut être différent de celui qui vient d'être décrit sans pour autant sortir du cadre de l'invention. Ainsi, par exemple, on pourrait modifier le circuit de circulation de la fraction de gaz résiduaire, utilisée pour le refroidissement du catalyseur CLAUS venant d'être régénéré, de telle sorte que le courant gazeux dérivé par le conduit 11 soit introduit, par le conduit 24b, dans le réacteur 2b en phase de refroidissement et soit évacué dudit réacteur par le conduit 30b pour être ramené au conduit 13.

De même, un dispositif pour la mise en oeuvre du procédé selon l'invention associant, en série, une unité d'épuration à une unité d'oxydation catalytique peut être obtenu à partir du dispositif schématisé sur la figure du dessin annexé, en constituant chacun des réacteurs 2a et 2b sous la forme d'un réacteur mixte, qui comporte entre ses passages extrêmes (21a et 22a pour le réacteur 2a et 21b et 22b pour le réacteur 2b), comme indiqué dans la demande de brevet français N°9512988, une zone catalytique CLAUS, renfermant un lit d'un catalyseur CLAUS, surmontée d'une zone d'oxydation catalytique, renfermant un lit d'un catalyseur d'oxydation catalytique et équipée d'un conduit d'injection d'air, lesdites zones communiquant, d'une part, par un premier conduit de liaison sur lequel est monté un échangeur indirect de chaleur et, d'autre part, par un deuxième conduit de liaison équipé d'une vanne d'obturation.

Pour compléter la description du procédé selon l'invention présentée ci-dessus, on donne ci-après, à titre non limitatif, un exemple de mise en oeuvre dudit procédé.

### EXEMPLE :

En faisant appel à un dispositif analogue à celui qui est schématisé sur la figure du dessin annexé et qui fonctionne comme décrit précédemment, on traitait un gaz résiduaire d'usine à soufre ayant la composition suivante en pourcentages en volume, hors soufre vapeur et vésiculaire.

| | | |
|---|---|---|
| H₂S : 0,94 | H₂O : 33,10 | CO : 0,40 |
| SO₂ : 0,47 | N₂ 60,60 | COS : 0,07 |
| CO₂ : 1,84 | H₂ : 2,55 | CS₂ : 0,03 |

L'unité d'hydrolyse renfermait un catalyseur promoteur de l'hydrolyse des composés COS et CS₂ en H₂S, ledit catalyseur consistant en extrudés, de 4 mm de diamètre, d'oxyde de titane renfermant 10% en poids de sulfate de calcium.

Chacun des réacteurs 2a et 2b de l'unité d'épuration 2 renfermait un catalyseur CLAUS consistant en billes, de 2 à 5 mm de diamètre, d'une alumine activée imprégnée de 7% en poids d'oxyde de titane et présentant une surface spécifique, déterminée par la méthode d'adsorption d'azote dite méthode BET (norme NF X 11-621), égale à environ 240 m²/g.

Le gaz résiduaire à traiter, arrivant de l'usine à soufre avec un débit de 10 000 Nm³/heure, soit 446 kmoles/heure, et une température de 130°C, était porté à 300°C dans l'échangeur indirect de chaleur 8 et était ensuite introduit à cette température dans l'unité d'hydrolyse. Le temps de séjour du gaz résiduaire au contact du catalyseur contenu dans ladite unité d'hydrolyse était égal à 4 secondes dans les conditions normales de pression et de température. Le gaz résiduaire hydrolysé sortant de l'unité d'hydrolyse ne renfermait plus que des traces de COS et de CS₂, le taux d'hydrolyse de ces composés étant supérieur à 99%, et sa teneur globale en H₂S et SO₂ était inférieure à celle que l'on pouvait prévoir à partir des seules réactions d'hydrolyse de COS et de CS₂, ce qui indique que du soufre s'est également formé par réaction de CLAUS. La température en sortie de l'unité d'hydrolyse 1 était égale à 309°C.

Une fraction du gaz résiduaire hydrolysé, correspondant à un débit de 5055 Nm³/heure, était dérivée par le conduit 19, le reste du gaz résiduaire hydrolysé traversant la vanne 16. Le courant gazeux résultant du mélange du gaz résiduaire hydrolysé avec l'effluent de régénération arrivant par le conduit 20 passait, avec un débit de 10069 Nm³/heure, soit 449 kmoles/heure, et une température de 294°C, dans l'échangeur indirect de chaleur 17 du type condenseur à soufre. Le courant gazeux sortant de l'échangeur indirect de chaleur 17 avait un débit de 10025 Nm³/heure, soit 447 kmoles/heure, et une température de 128°C et il était introduit, dans ces conditions de débit et de température, dans le réacteur 2a opérant en phase de réaction. Dans ledit réacteur, les composés H₂S et SO₂ contenus dans le gaz résiduaire hydrolysé réagissaient entre eux au contact du catalyseur CLAUS pour former du soufre se déposant sur le catalyseur avec production d'un gaz résiduaire substantiellement épuré ayant une température d'environ 146°C et renfermant H₂S et SO₂ dans un rapport molaire H₂S :SO₂ égal à 2 :1 et en concentration globale égale à 1400 ppm en volume, lequel gaz épuré était évacué du réacteur 2a par le conduit 30a et ensuite acheminé par le conduit 31a, à travers la vanne 32a, dans le conduit 33 d'évacuation du gaz résiduaire traité.

Le gaz de balayage, utilisé pour la régénération du catalyseur chargé de soufre contenu dans le réacteur 2b en phase de régénération était constitué de la fraction ayant un débit de 5055 Nm³/heure, prélevée, par le conduit 19, sur le gaz résiduaire hydrolysé issu de l'unité d'hydrolyse, ladite fraction ayant une température de 280°C lors de son introduction, par les conduits 36, 34b et 30b, dans le réacteur 2b en phase de régénération. L'effluent gazeux chargé de soufre, issu du réacteur 2b par le conduit 24b, était ensuite réintroduit, par les conduits 29 et 20, dans le gaz résiduaire hydrolysé amené à l'échangeur de chaleur 17, le mélange ainsi réalisé ayant, comme indiqué précédemment, une température de 294°C et un débit de 10069 Nm³/heure à l'entrée dudit échangeur. Le soufre contenu dans ce mélange, en provenance pour partie du réacteur 2b en phase de régénération et pour autre partie du réacteur d'hydrolyse 1, était condensé dans cet échangeur à 128°C.

Le gaz de refroidissement, utilisé pour le refroidissement du catalyseur venant d'être régénéré, consistait en une fraction ayant un débit de 5100 Nm³/heure, qui était prélevée, par le conduit 11, sur le gaz résiduaire issu de l'usine à soufre avec une température de 130°C. L'effluent gazeux issu du réacteur 2b en phase de refroidissement était réinjecté, par les conduits 29 et 13, dans le gaz résiduaire amené à l'échangeur de chaleur 8 précédant l'unité d'hydrolyse.

Les réacteurs 2a et 2b opéraient alternativement pendant 30 heures en phase de réaction et pendant 30 heures, dont 10 heures de refroidissement, en phase de régénération/refroidissement.

Le dispositif d'épuration ci-dessus, fonctionnant dans les conditions venant d'être décrites, permet de désulfurer des gaz résiduaires d'usine à soufre en réduisant leur teneur en composés soufrés jusqu'à 1400 ppm en volume d'H₂S+SO₂ résiduels. Les gaz épurés sont ensuite incinérés avant rejet à l'atmosphère. Les rejets de 1400 ppm en volume d'H₂S+SO₂ résiduels correspondent à un rendement global en soufre égal à 99,5% pour l'ensemble associant l'usine à soufre, dont sont issus les gaz résiduaires à épurer, et le dispositif d'épuration, ledit rendement étant compté à partir de la teneur en H₂S de la charge en gaz acide introduite dans l'usine à soufre.

## Revendications

1. Procédé d'élimination des composés soufrés H₂S, SO₂, COS et/ou CS₂ contenus dans un gaz résiduaire d'usine à soufre avec récupération desdits composés sous la forme de soufre, lequel procédé consiste (i) à mettre en contact le gaz résiduaire, issu de l'usine à soufre, avec un catalyseur d'hydrolyse des composés COS et CS₂ en H₂S, disposé dans une unité d'hydrolyse (1), en opérant à une température suffisante pour produire un gaz résiduaire hydrolysé (15) renfermant H₂S et SO₂ et substantiellement exempt de COS et CS₂, (ii) à amener le gaz résiduaire hydrolysé, après une étape de refroidissement (17) à une température inférieure au point de rosée du soufre, à une unité d'épuration (2) constituée d'une pluralité de zones catalytiques (2a,2b) renfermant chacune un catalyseur promoteur de la réaction de CLAUS, dit catalyseur CLAUS, et opérant chacune, tour à tour, en phase de réaction, puis en phase de régénération et enfin en phase de refroidissement de manière qu'à chaque instant il y ait au moins une zone catalytique en phase de réaction (2a) et une zone catalytique en phase de régénération (2b) ou de refroidissement, (iii) à faire passer le gaz résiduaire hydrolysé, amené à l'unité d'épuration, dans la zone ou les zones catalytiques en phase de réaction (2a), en opérant à des températures inférieures au point de rosée du soufre, de telle sorte que les composés H₂S et SO₂ présents dans ledit gaz réagissent l'un sur l'autre pour former du soufre, qui se dépose sur le catalyseur (23a) contenu dans lesdites zones, et qu'on obtienne, en sortie de l'unité d'épuration (33), un gaz résiduaire substantiellement épuré, (iv) à faire circuler dans la zone catalytique en phase de régénération (2b), qui renferme du catalyseur CLAUS (23b) chargé de soufre, un courant de gaz chaud non oxydant ayant une température entre 200°C et 500°C, plus particulièrement entre 250°C et 400°C, pour régénérer ledit catalyseur et former un effluent gazeux chargé de soufre vaporisé, et (v) à faire passer un courant de gaz ayant une température inférieure à 160°C dans la zone catalytique (2b) renfermant le catalyseur venant d'être régénéré, pour refroidir ledit catalyseur, après sa régénération, jusqu'à la température requise pour une nouvelle mise en contact avec le gaz résiduaire hydrolysé et il se caractérise en ce qu'on prélève(19) au moins une fraction du gaz résiduaire hydrolysé, issu de l'unité d'hydrolyse, pour constituer la totalité du courant de gaz chaud circulant dans la zone catalytique (2b) en phase de régénération et réinjecte (24b,29,20) la totalité de l'effluent gazeux sortant de ladite zone dans le gaz résiduaire hydrolysé amené à l'unité d'épuration, en un point situé en aval dudit prélèvement et en amont de l'étape de refroidissement (17) avec condensation du soufre vaporisé, à laquelle est soumis le gaz résiduaire hydrolysé avant son entrée (21a) dans l'unité d'épuration, et en ce qu'on prélève (11) au moins une fraction du gaz résiduaire à traiter, amené à l'unité d'hydrolyse, pour constituer la totalité du courant de gaz de refroidissement passant au contact du catalyseur venant d'être régénéré présent dans la zone catalytique (2b) en phase de refroidissement et réintroduit (24b,29,13) la totalité de l'effluent gazeux sortant de cette zone dans ledit gaz résiduaire, en un point situé en aval de ce prélèvement et en amont d'une étape (8) de chauffage du gaz résiduaire avant l'introduction dudit gaz dans l'unité d'hydrolyse.

2. Procédé selon la revendication 1, caractérisé en ce que la fraction de gaz prélevée sur le gaz résiduaire hydrolysé pour constituer le courant de gaz circulant dans la zone catalytique en phase de régénération représente 30% à 100% du débit dudit gaz résiduaire hydrolysé, ladite fraction représentant plus particulièrement 30% à 80% et plus spécialement 40% à 60% du débit du gaz résiduaire hydrolysé.

3. Procédé selon la revendication 1 ou 2, caractérisé en ce que la fraction de gaz prélevée sur le gaz résiduaire à traiter pour constituer le courant de gaz de refroidissement, passant au contact du catalyseur venant d'être régénéré présent dans la zone catalytique en phase de refroidissement, représente 30% à 100% du débit dudit gaz résiduaire, ladite fraction représentant plus particulièrement 30% à 80% et plus spécialement 40% à 60% du débit du gaz résiduaire à traiter.

4. Procédé selon l'une des revendications 1 à 3, caractérisé en ce qu'on introduit dans l'unité d'hydrolyse un débit contrôlé d'un flux gazeux contenant de l'oxygène libre.

5. Procédé selon la revendication 4, caractérisé en ce qu'on introduit le flux gazeux contenant de l'oxygène libre dans le gaz résiduaire amené à l'unité d'hydrolyse, en un point qui est situé en aval du point de réintroduction, dans ledit gaz résiduaire, de l'effluent gazeux sortant de la zone catalytique en phase de refroidissement, et, qui se trouve, de préférence, en amont de l'étape de chauffage du gaz résiduaire avant l'introduction dudit gaz dans l'unité d'hydrolyse.

6. Procédé selon l'une des revendications 1 à 5, caractérisé en ce que l'unité d'épuration opère de telle sorte qu'à chaque instant il y ait au moins une zone catalytique en phase de réaction et une zone catalytique en phase de régénération/refroidissement.

7. Procédé selon l'une des revendications 1 à 5, caractérisé en ce que l'unité d'épuration opère de telle sorte qu'à chaque instant il y ait au moins une zone catalytique en phase de réaction, une zone catalytique en phase de régénération et une zone catalytique en phase de refroidissement.

8. Procédé selon la revendication 6 ou 7, caractérisé en ce que l'unité d'épuration comporte plusieurs zones catalytiques en phase de réaction, lesdites zones catalytiques fonctionnant en parallèle.

9. Procédé selon l'une des revendications 1 à 8, caractérisé en ce que l'effluent gazeux issu de l'unité d'épuration est soumis à une incinération thermique ou catalytique avant d'être rejeté à l'atmosphère.

10. Procédé selon l'une des revendications 1 à 8, caractérisé en ce que l'unité d'épuration traite un gaz résiduaire hydrolysé renfermant H₂S et SO₂ dans un rapport molaire H₂S : SO₂ supérieur à 2 :1 et, par exemple tel que les concentrations dudit gaz en H₂S et SO₂, exprimées en pourcentages volumiques (H₂S) et (SO₂), sont telles que la quantité (H₂S)- 2(SO₂) soit comprise entre 0,1% et 0,5% pour produire, en sortie de l'unité d'épuration, un gaz résiduaire renfermant essentiellement H₂S comme composé soufré et en ce que ledit gaz résiduaire est amené à passer dans une unité d'oxydation catalytique, dans laquelle l'H₂S résiduel est oxydé sélectivement en soufre au moyen d'un gaz renfermant de l'oxygène libre au contact d'un catalyseur approprié et à des températures inférieures au point de rosée du soufre, et, par exemple, allant de 60°C à 150°C et plus spécialement de 90°C à 130°C, pour parfaire l'épuration du gaz.

11. Procédé selon la revendication 10, caractérisé en ce qu'à chaque zone catalytique CLAUS de l'unité d'épuration est associée, en série, une zone d'oxydation catalytique appartenant à l'unité d'oxydation catalytique, chaque couple ainsi formé d'une zone catalytique CLAUS et d'une zone d'oxydation catalytique fonctionnant, tour à tour, en phase de réaction, puis en phase de régénération et enfin en phase de refroidissement.

12. Procédé selon la revendication 11, caractérisé en ce qu'on opère de telle sorte qu'à chaque instant il y ait au moins un couple de zones en phase de réaction et un couple de zones en phase de régénération/refroidissement

13. Procédé selon la revendication 11, caractérisé en ce qu'on opère de telle sorte qu'à chaque instant il y ait au moins un couple de zones en phase de réaction, un couple de zones en phase de régénération et un couple de zones en phase de refroidissement.

14. Procédé selon la revendication 12 ou 13, caractérisé en ce que le courant de gaz chaud, qui circule dans la zone catalytique CLAUS, en phase de régénération, de l'unité d'épuration, passe ensuite dans la zone d'oxydation catalytique associée, également en phase de régénération, de l'unité d'oxydation catalytique et la totalité de l'effluent gazeux sortant de ladite zone d'oxydation catalytique, en phase de régénération, forme l'effluent gazeux qui est réinjecté dans le gaz résiduaire hydrolysé amené à l'unité d'épuration, tandis que le courant de gaz de refroidissement passant au contact du catalyseur, venant d'être régénéré, présent dans la zone catalytique CLAUS, en phase de refroidissement, de l'unité d'épuration, passe ensuite dans la zone d'oxydation catalytique associée, également en phase de refroidissement, de l'unité d'oxydation catalytique et la totalité de l'effluent gazeux sortant de ladite zone d'oxydation catalytique, en phase de refroidissement, forme l'effluent gazeux qui est réintroduit dans le gaz résiduaire amené à l'unité d'hydrolyse.

15. Procédé selon l'une des revendications 10 à 14, caractérisé en ce que l'effluent gazeux épuré issu de l'unité d'oxydation catalytique est soumis à une incinération thermique ou catalytique avant d'être rejeté à l'atmosphère.

16. Procédé selon la revendication 9 ou 15, caractérisé en ce que le gaz résiduaire à traiter, après réinjection dans ce dernier de l'effluent gazeux sortant de la zone catalytique CLAUS, en phase de refroidissement, de l'unité d'épuration ou bien sortant de la zone d'oxydation catalytique associée, en phase de refroidissement, de l'unité d'oxydation catalytique est réchauffé, avant son introduction dans l'unité d'hydrolyse, par échange indirect de chaleur entre ledit gaz résiduaire et les produits gazeux chauds résultant de l'incinération du gaz épuré.

## Claims

1. Process for removing the sulphur compounds H₂S, SO_{2,} COS and/or CS₂ contained in a residual sulphur-plant gas with the said compounds being recovered in the form of sulphur, which process consists (i) in bringing the residual gas from the sulphur plant into contact with a catalyst for the hydrolysis of the compounds COS and CS₂ into H₂5, which is arranged in a hydrolysis unit (1), while operating at a temperature sufficient to produce a hydrolysed residual gas (15) which contains H₂5 and SO₂ and is substantially free from COS and CS₂, (ii) in conveying the hydrolysed residual gas, after a step of cooling (17) to a temperature below the dew point of sulphur, to a purification unit (2) consisting of a plurality of catalytic zones (2a, 2b), each containing a catalyst which promotes the Claus reaction, referred to as a Claus catalyst, and each operating in turn in reaction phase then in regeneration phase and finally in cooling phase so that, at any time, there is at least one catalytic zone in reaction phase (2a) and one catalytic zone in regeneration (2b) or cooling phase, (iii) in passing the hydrolysed residual gas conveyed to the purification unit through the catalytic zone or zones in reaction phase (2a), while operating at temperatures below the dew point of sulphur, so that the compounds H₂5 and SO₂ present in the said gas react with one another to form sulphur which deposits on the catalyst (23a) contained in the said zones, and so that a substantially purified residual gas is obtained at the outlet of thepurification unit (33), (iv) in circulating a hot non-oxidizing gas stream having a temperature of between 200°C and 500°C, more particularly between 250°C and 400°C, through the catalytic zone in regeneration phase (2b) which contains Claus catalyst (23b) loaded with sulphur, in order to regenerate the said catalyst and form an effluent gas loaded with vaporized sulphur, and(v) in passing a gas stream having a temperature below 160°C through the catalytic zone (2b) containing the catalyst which has just been regenerated, in order to cool the said catalyst after it has been regenerated to the temperature required for again bringing it into contact with the hydrolysed residual gas, and is characterized in that at least a fraction of the hydrolysed residual gas leaving the hydrolysis unit is drawn off (19) to form all of the hot gas stream circulating through the catalytic zone (2b) in regeneration phase, and all of the effluent gas leaving the said zone is reinjected (24b, 29, 20) into the hydrolysed residual gas conveyed to the purification unit, at a point located downstream of the said withdrawal and upstream of the cooling step (17) which involves condensation of the vaporized sulphur and to which the hydrolysed residual gas is subjected before it enters (21a) the purification unit, and in that at least a fraction of the residual gas which is to be treated and is conveyed to the hydrolysis unit is drawn off (11) to form all of the cooling gas stream flowing in contact with the catalyst which has just been regenerated and is present in the catalytic zone (2b) in the cooling phase, and all of the effluent gas leaving this zone is reintroduced (24b, 29, 13) into the said residual gas, at a point located downstream of this withdrawal and upstream of a step (8) of heating the residual gas before the said gas is introduced into the hydrolysis unit.

2. Process according to Claim 1, characterized in that the gas fraction drawn off from the hydrolysed residual gas to form the gas stream circulating through the catalytic zone in regeneration phase represents 30% to 100% of the flow rate of the said hydrolysed residual gas, the said fraction more particularly representing 30% to 80% and more especially 40% to 60% of the flow rate of the hydrolysed residual gas.

3. Process according to claim 1 or 2, characterized in that the gas fraction drawn off from the residual gas to be treated in order to form the cooling gas stream which flows in contact with the catalyst which has just been regenerated and is present in the catalytic zone in the cooling phase, represents 30% to 100% of the flow rate of the said residual gas, the said fraction more particularly representing 30% to 80% and more especially 40% to 60% of the flow rate of the residual gas to be treated.

4. Process according to one of Claims 1 to 3, characterized in that a controlled flow rate of a gas flow containing free oxygen is introduced into the hydrolysis unit.

5. Process according to Claim 4, characterized in that the gas flow containing free oxygen is introduced into the residual gas conveyed to the hydrolysis unit, at a point which is located downstream of the point at which the effluent gas leaving the catalytic zone in the cooling phase is reintroduced into the said residual gas, and which preferably lies upstream of the step of heating the residual gas before the said gas is introduced into the hydrolysis unit.

6. Process according to one of Claims 1 to 5, characterized in that the purification unit operates in such a way that, at any time, there is at least one catalytic zone in reaction phase and one catalytic zone in regeneration/cooling phase.

7. Process according to one of Claims 1 to 5, characterized in that the purification unit operates in such a way that, at any time, there is at least one catalytic zone in reaction phase, one catalytic zone in regeneration phase and one catalytic zone in cooling phase.

8. Process according to Claim 6 or 7, characterized in that the purification unit includes a plurality of catalytic zones in reaction phase, the said catalytic zones operating in parallel.

9. Process according to one of Claims 1 to 8, characterized in that the effluent gas leaving the purification unit is subjected to thermal or catalytic incineration before being discharged to the atmosphere.

10. Process according to one of Claims 1 to 8, characterized in that the purification unit treats a hydrolysed residual gas containing H₂S and SO₂ in an H₂S : SO₂ molar ratio of greater than 2 : 1, and for example such that the concentrations of H₂S and SO₂ in the said gas, expressed as percentages by volume (H₂S) and(SO₂), are such that the quantity (H₂S) - 2(SO₂) is between 0.1% and 0.5% in order, at the outlet of the purification unit, to produce a residual gas containing essentially H₂S as sulphur compound, and in that the said residual gas is made to flow through a catalytic oxidation unit in which the residual H₂S is oxidized selectively to form sulphur by means of a gas containing free oxygen in contact with a suitable catalyst and at temperatures below the dew point of sulphur, and for example ranging from 60°C to 150°C and more especially from 90°C to 130°C, in order to complete the purification of the gas.

11. Process according to claim 10, characterised in that a catalytic oxidation zone belonging to the catalytic oxidation unit is associated in series with each Claus catalytic zone of the purification unit, each pair thereby formed from a claus catalytic zone and a catalytic oxidation zone operating in turn in the reaction phase, then the regeneration phase and finally, the cooling phase.

12. Process according to claim 11, characterised in that operations are such that, at each instant, there is at least one pair of zones at the reaction phase and two zones at the regeneration/cooling phase.

13. Process according to claim 11, characterized in that operations are such that, at each instant, there are at least a couple of zones at the reaction phase, a couple of zones at the regeneration phase and a couple of zones at the cooling phase.

14. The process according to claim 12 or 13, characterized in that the stream of hot gas, circulating in the Claus catalytic zone, of the purification unit operating in the regeneration phase, then passes into the associated catalytic oxidation zone, also operating in the regeneration phase, of the catalytic oxidation unit, and the totality of the effluent gas leaving said catalytic oxidation zone, at the regeneration phase, forms the effluent gas which is reinjected into the hydrolized residual gas brought to the purification unit, while the stream of cooling gas passing in contact with the catalyst that has just been regenerated, present in the Claus catalytic zone, at the cooling phase, of the purification unit, then passes into the associated catalytic oxidation zone, also at the cooling phase, of the catalytic oxidation unit and the totality of the effluent gas leaving the said catalytic oxidation zone, at the cooling phase, forms the effluent gas which is reinjected into the residual gas brought to the hydrolysis unit.

15. Process according to one of Claims 10 to 14, characterized in that the purified effluent gas leaving the catalytic oxidation unit is subjected to thermal or catalytic incineration before being discharged to the atmosphere.

16. Process according to Claim 9 or 15, characterized in that, after the effluent gas leaving the Claus catalytic zone of the purification unit operating in cooling phase, or leaving the associated catalytic oxidation zone of the catalytic oxidation unit operating in cooling phase, has been reinjected into the residual gas to be treated, this residual gas to be treated is heated before it is introduced into the hydrolysis unit, by indirect heat exchange between the said residual gas and the hot product gases resulting from the incineration of the purified residual gas.

## Patentansprüche

1. Verfahren für die Entfernung von in dem Restgas einer Schwefelfabrik enthaltenen Schwefelverbindungen H₂S, SO_{2,} COS bzw. CS₂, unter Rückgewinnung dieser Verbindungen in Form von Schwefel, wobei das Verfahren darin besteht,
(i) das aus der Schwefelfabrik stammende Restgas mit einem in einer Hydrolyseeinheit (1) befindlichen Katalysator für die Hydrolyse der Verbindungen COS und CS₂ in H₂S in Kontakt zu bringen, unter für die Bildung von hydrolysiertem Restgas (15), das H₂S und SO₂ enthält und im wesentlichen frei von COS und CS₂ ist, ausreichenden Temperaturbedingungen,
(ii) das hydrolysierte Restgas nach einem Abkühlschritt (17) auf eine Temperatur unterhalb des Taupunkts von Schwefel einer Reinigungseinheit (2) zuzuführen, wobei diese aus einer Mehrzahl von katalytischen Bereichen (2a, 2b) besteht, welche jeweils einen Katalysator der Reaktion von Claus, auch Claus-Katalysator genannt, enthalten, und welche jeweils nacheinander eine Reaktionsphase, Regenerierungsphase und schließlich eine Abkühlphase durchlaufen, derart, dass sich in jedem Moment mindestens ein Katalytischer Bereich in der Reaktionsphase (2a) und ein katalytischer Bereich in der Regenerierungsphase (2b) oder Abkühlphase befindet,
(iii) das der Reinigungseinheit zugeführte hydrolysierte Restgas in den(die) katalytischen Bereich(e) in der Reaktionsphase (2a) zuzuführen, unter Temperaturbedingungen unterhalb des Taupunkts von Schwefel, derart, dass die im Abgas anwesenden Verbindungen H₂S und SO₂ miteinander reagieren und Schwefel bilden, welcher sich auf diesen in den Bereichen befindlichen Katalysator (23a) absetzt, und man am Ausgang der Reinigungseinheit (33) ein im wesentlichen gereinigtes Restgas erhält,
(iv) in dem katalytischen Bereich in der Regenerierungsphase (2b), welcher einen mit Schwefel beladenen Clauskatalysator (23b) enthält, einen warmen nichtoxydierenden Gasstrom mit einer Temperatur von zwischen 200 bis 500°C, insbesondere zwischen 250 und 400°C zirkulieren zu lassen, um den Katalysator zu regenerieren und einen mit verdampftem Schwefel beladenen Abgasstrom zu bilden, und
(v) einen Gasstrom mit einer Temperatur unterhalb von 160°C in dem den soeben regenerierten Katalysator enthaltenden katalytischen Bereich (2b) einzuleiten, zum Abkühlen des Katalysators nach seiner Regenerierung auf die für das neuerliche in Kontakt bringen mit dem hydrolysierten Restgas erforderliche Temperatur, und es ist dadurch gekennzeichnet, dass man mindestens eine Fraktion des aus der Hydrolyseeinheit stammenden hydrolysierten Restgases entnimmt (19), um die Gesamtheit des in dem katalytischen Bereich (2b) in der Regenerierungsphase zirkulierenden Gasstroms zu bilden und die Gesamtheit des aus diesem Bereich ausströmenden Abgas (24b, 29, 20) in das der Reinigungseinheit zugeführte hydrolysierte Restgas an einem Punkt einbläst, der sich stromabwärts der Entnahmestelle und stromaufwärts des Abkühlschritts (17) befindet, unter Kondensation des verdampften Schwefels, welcher das hydrolysierte Restgas vor seinem Eintritt (21 a) in die Reinigungseinheit unterworfen wird, und dadurch, dass man mindestens eine Fraktion des zu behandelnden und der Hydrolyseeinheit zugeführten Restgases entnimmt (11), um die Gesamtheit des Abkühlgases zu bilden, das den soeben regenerierten Katalysator im katalytischen Bereich (2b) in der Abkühlphase umströmt und die Gesamtheit des aus diesem Bereich ausströmenden Abgases dem Restgas an einem Punkt stromabwärts dieser Entnahmestelle und stromaufwärts eines Heizschritts (8) des Restgases wiederzuführt (24b, 29, 13), vor Einführung des Restgases in die Hydrolyseeinheit.

2. Verfahren gemäß Anspruch 1, gekennzeichnet dadurch, dass die aus dem hydrolysierten Restgas entnommene Gasfraktion für die Bildung des in dem katalytischen Bereich in der Regenerierungsphase zirkulierenden Gasstrom 30 bis 100% des Durchsatzes an hydrolysiertem Restgas darstellt, wobei diese Fraktion insbesondere 30 bis 80% und mehr sowie noch spezieller 40 bis 60% des Durchsatzes an hydrolysiertem Restgas darstellt.

3. Verfahren gemäß Anspruch 1 oder 2, gekennzeichnet dadurch, dass die aus dem zu behandelnden Restgas entnommene Gasfraktion für die Bildung des Abkühlgases, das den soeben regenerierten Katalysator im katalytischen Bereich in der Abkühlphase umströmt, 30 bis 100% des Durchsatzes an Restgas darstellt, wobei diese Fraktion insbesondere 30 bis 80% und mehr sowie noch spezieller 40 bis 60% des Durchsatzes an zu behandelndem Restgas darstellt.

4. Verfahren gemäß mindestens einem der Ansprüche 1 bis 3, gekennzeichnet dadurch, dass man einen vorbestimmten Durchsatz eines freien Sauerstoff enthaltenden Gasstroms in die Hydrolyseeinheit einbläst.

5. Verfahren gemäß Anspruch 4, gekennzeichnet dadurch, dass man den freien Sauerstoff enthaltenden Gasstrom in das der Hydrolyseeinheit zugeführten Restgas einbläst, an einem Punkt stromabwärts des Punktes der Wiederzutührung des aus dem katalytischen Bereich in der Abkühlphase ausströmenden Abgases in das Restgas, und das sich vorzugsweise stromaufwärts des Heizschrittes des Abgases vor Einblasen dieses Gases in die Hydrolyseeinheit befindet.

6. Verfahren gemäß mindestens einem der Ansprüche 1 bis 5, gekennzeichnet dadurch, dass die Reinigungseinheit derart betrieben wird, dass sich in jedem Moment mindestens ein katalytischer Bereich in der Reaktionsphase und ein katalytischer Bereich in der Regenerierungs/Abkühlphase befindet.

7. Verfahren gemäß mindestens einem der Ansprüche 1 bis 5, gekennzeichnet dadurch, dass die Reinigungseinheit derart betrieben wird, dass sich in jedem Moment mindestens ein katalytischer Bereich in der Reaktionsphase, ein katalytischer Bereich in der Regenerierungsphase und ein katalytischer Bereich in der Abkühlphase befindet.

8. Verfahren gemäß Anspruch 6 oder 7, gekennzeichnet dadurch, dass die Reinigungseinheit mehrere katalytischer Bereiche in der Reaktionsphase aufweist, wobei diese katalytischen Bereiche parallel geschaltet sind.

9. Verfahren gemäß mindestens einem der Ansprüche 1 bis 8, gekennzeichnet dadurch, dass das Abgas aus der Reinigungseinheit vor dem Ausstoß in die Atmosphäre einer thermischen oder katalytischen Verbrennung unterworfen wird.

10. Verfahren gemäß mindestens einem der Ansprüche 1 bis 8, gekennzeichnet dadurch, dass die Reinigungseinheit ein H₂S und SO₂ enthaltendes hydrolysiertes Restgas in einem Molverhältnis H₂S : SO₂ oberhalb von 2 : 1 behandelt, zum Beispiel derart, dass die Konzentrationen des Gases an H₂S und SO_{2,} in Volumenprozent (H₂S) und (SO₂) ausgedrückt, derart sind, dass die Menge (H₂S) - 2(SO₂) zwischen 0,1 % und 0,5% ausmacht und am Ausgang der Reinigungseinheit ein Restgas bildet, das im wesentlichen H2S als Schwefelverbindung enthält und dadurch, dass das Restgas einer katalytischen Oxydationseinheit zugeführt wird, in welcher das restliche H₂S mittels eines freien Sauerstoff enthaltenden Gas in Kontakt mit einem angebrachten Katalysator und bei Temperaturen unterhalb des Taupunktes von Schwefel, wie zum Beispiel von 60°C bis 150°C und insbesondere von 90°C bis 130°C selektiv in Schwefel oxydiert wird, um die Reinigung des Gases zu vervollständigen.

11. Verfahren gemäß Anspruch 10, gekennzeichnet dadurch, dass in jedem Claus-katalytischen Bereich der Reinigungseinheit ein in Serie geschalteter katalytischer Oxydationsbereich zugeordnet ist, welcher dem katalytischen Oxydationseinheit angehört, wobei jedes derart gebildete Paar eines Claus-katalytischen Bereichs und eines katalytischen Oxydationsbereichs nacheinander die Reaktionsphase, der Regenerierungsphase und die Abkühlphase durchlaufen.

12. Verfahren gemäß Anspruch 11, gekennzeichnet dadurch, dass derart vorgegangen wird, dass sich in jedem Moment mindestens ein Bereichspaar in der Reaktionsphase und ein Bereichspaar in der Regenerierungsphase / Abkühlphase befindet.

13. Verfahren gemäß Anspruch 11, gekennzeichnet dadurch, dass derart vorgegangen wird, dass sich in jedem Moment mindestens ein Bereichspaar in der Reaktionsphase, ein Bereichspaar in der Regenerierungsphase und ein Bereichspaar in der Abkühlphase befindet.

14. Verfahren gemäß Anspruch 12 oder 13, gekennzeichnet dadurch, dass der warme Gasstrom, welcher im Claus-katalytischen Bereich in der Regenerierungsphase der Reinigungseinheit zirkuliert, anschließend in den ebenfalls in der Regenerierungsphase befindlichen beigeordneten katalytischen Oxydationsbereich der katalytischen Oxydationseinheit weitergeführt wird und dass die Gesamtheit des aus dem in der Regenerierungsphase befindlichen katalytischen Oxydationsbereich austretenden Abgases, das Abgas, welches in das der Reinigungseinheit zugeführten hydrolysierte Restgas wieder zugeführt wird, bildet, während der Abkühlgasstrom, welcher den soeben regenerierten Katalysator in dem Claus- katalytischer Bereich in der Abkühlphase der Reinigungseinheit umströmt, anschließend in den beigeordneten katalytischen Oxydationsbereich, ebenfalls in der Abkühlphase, der katalytischen Oxydationseinheit geleitet wird und die Gesamtheit des aus dem katalytischen Oxydationsbereich in der Abkühlphase austretenden Abgases das Abgas, welches in das der Hydrolyseeinheit zugeführte Abgas wieder eingeblasen wird, bildet.

15. Verfahren gemäß mindestens einem der Ansprüche 10 bis 14, gekennzeichnet dadurch, dass das gereinigte Abgas aus der katalytischen Oxydationseinheit einer thermischen oder katalytischen Verbrennung unterworfen wird.

16. Verfahren gemäß Anspruch 9 oder 15, gekennzeichnet dadurch, dass das zu behandelnde Restgas, nach dem Wiedereinblasen in dieses des aus dem Claus-katalytischen Bereich in der Abkühlphase der Reinigungseinheit oder aus dem beigeordneten katalytischen Oxydationsbereich in der Abkühlphase der katalytischen Oxydationseinheit austretenden Abgases, vor seinem Einblasen in die Hydrolyseeinheit durch indirekten Wärmeaustausch zwischen dem Restgas und den warmen Gasprodukten der Verbrennung des gereinigten Gases erwärmt wird.
